# FASCICULE DE BREVET EUROPEEN

(11) **EP 3 976 949 B1**
(45) Date de publication et mention de la délivrance du brevet: **12.07.2023**
(21) Numéro de dépôt: 20740701.6
(22) Date de dépôt: 12.05.2020
(51) Int. Cl.: F02C 7/25

(54) **PAROI COUPE-FEU ET PROCÉDÉ D'OUVERTURE DE CELLE-CI**
BRANDWAND UND VERFAHREN ZUM ÖFFNEN DAVON
FIRE WALL AND METHOD FOR OPENING SAME

(30) Priorité: 28.05.2019 FR 1905651
(43) Date de publication de la demande: 06.04.2022
(73) Titulaire: SAFRAN AIRCRAFT ENGINES, 75015 Paris (FR)
(72) Inventeur: POU, Romain, Harold, Patrice, 77550 MOISSY-CRAMAYEL (FR); DAUTREPPE, Frédéric, 77550 MOISSY-CRAMAYEL (FR); DUFOUR, Bertrand, Romain, Adrien, 77550 MOISSY-CRAMAYEL (FR); GOUPIL, Frédéric, Jacques, Eugène, 77550 MOISSY-CRAMAYEL (FR)
(74) Mandataire: Cabinet Beau de Loménie
(86) Numéro de dépôt international: PCT/FR2020/050779
(87) Numéro de publication internationale: WO 2020/240107

(56) Documents cités:
- EP-A1- 1 741 879
- WO-A1-2015/028756
- GB-A- 2 497 934

## Description

### Domaine Technique

La présente divulgation concerne le domaine des turbomachines, et en particulier une paroi coupe-feu pour bras de servitude de turbomachine.

On entend ici par "turbomachine" tout ensemble comprenant, d'amont en aval dans un sens d'écoulement d'un fluide de travail, un compresseur, une chambre de combustion et une turbine reliée mécaniquement par un arbre rotatif au compresseur. Parmi les turbomachines on compte donc les turbines à gaz, les turboréacteurs à simple ou double flux, les turbopropulseurs et les turbomoteurs. Technique antérieure

Cette divulgation concerne particulièrement les turboréacteurs à double flux ("turbofans" en anglais) sans toutefois être limitée à ceux-ci. En effet, pour permettre l'acheminement de fluides, tels que carburant, lubrifiant ou fluide hydraulique, ainsi que d'électricité, les turboréacteurs à double flux comprennent typiquement des bras de servitude, s'étendant radialement dans la veine d'air de la soufflante, et recevant, à l'intérieur d'une structure tubulaire, des faisceaux de conduits et/ou câbles électriques. Un exemple de tels bras de servitude a été divulgué dans les publications EP 1 741 879 A1 et WO 2015/028756 A1.

Afin d'empêcher la propagation d'éventuels incendies à l'intérieur de tels bras de servitude, des parois coupe-feu peuvent y être disposées transversalement, avec des orifices traversants pour le passage des conduits et câbles électriques s'étendant à l'intérieur du bras de servitude. Pour assurer l'étanchéité de la paroi coupe-feu, les conduits et/ou câbles électriques peuvent être reçus étroitement dans ces orifices traversants, par exemple dans des blocs d'étanchéité fixés à la paroi coupe-feu et dans lesquels sont formés ces orifices traversants.

Cet arrangement présentait toutefois l'inconvénient d'exiger normalement le démontage des blocs d'étanchéité, pour permettre l'extraction par passage à travers la paroi coupe-feu de même un seul des conduits et/ou câbles pour son inspection, son entretien, sa réparation et/ou son remplacement. De plus, un conduit ou un câble devait être déconnecté au moins à l'une de ses deux extrémités pour lui permettre d'être extrait par passage à travers une ouverture de la paroi coupe-feu qui en fonctionnement est occupée par un bloc d'étanchéité, une fois que le bloc d'étanchéité qui enserre ce conduit ou câble est démonté. Ceci rallongeait la durée du démontage dans des situations pour lesquelles il est souhaitable de démonter l'ensemble du bras de servitude. Le démontage du bras de servitude nécessitait de déconnecter l'ensemble des conduits et/ou câbles afin de les dégager de la paroi coupe-feu.

### Exposé de l'invention

La présente invention a l'objet de résoudre cet inconvénient en proposant une paroi coupe-feu, selon la revendication 1, facilitant l'accès à chaque conduit et/ou câble électrique la traversant.

Pour cela, une paroi coupe-feu pour bras de servitude de turbomachine suivant la présente invention comprend un ou plusieurs orifices traversants dans un sens de l'épaisseur de la paroi coupe-feu, une partie fixe, et une première partie amovible s'étendant, dans un sens de la largeur, orthogonal audit sens de l'épaisseur, d'au moins un orifice adjacent parmi les orifices traversants, à un premier bord extérieur de la paroi coupe-feu.

Grâce à cette disposition, en séparant la première amovible de la partie fixe, il est possible d'accéder directement depuis l'extérieur à un conduit ou câble électrique reçu dans ledit orifice adjacent, même pour l'en extraire individuellement. Il n'est donc plus nécessaire de faire passer un conduit ou câble électrique à travers une ouverture de la paroi coupe-feu pour l'en extraire. De plus, les conduits et/ou câbles ont généralement une flexibilité ou une souplesse suffisante pour être écartés vers l'extérieur afin de les dégager de la paroi coupe-feu sans devoir déconnecter leurs extrémités, ce qui permet de retirer le bras de servitude en le déplaçant vers l'aval de la turbomachine tout en laissant en place les conduits et/ou câbles. Le fait de ne pas devoir déconnecter les conduits et/ou câbles apporte un gain de temps substantiel pour une opération de démontage et retrait du bras de servitude.

Pour recevoir plusieurs conduits et/ou câbles électriques, la paroi coupe-feu peut comprendre une ou deux rangées desdits orifices traversants, s'étendant chacune dans un sens de la longueur, orthogonal auxdits sens de l'épaisseur et de la largeur.

Si la paroi coupe-feu comprend une première rangée et une deuxième rangée desdits orifices traversants lesdites rangées, la partie fixe de la paroi coupe-feu peut s'étendre dans le sens de la longueur entre celles-ci, la première partie amovible peut s'étendre de la première rangée au premier bord extérieur et une deuxième partie amovible de la paroi coupe-feu peut s'étendre de la deuxième rangée à un deuxième bord extérieur de la paroi coupe- feu, opposé au premier bord extérieur.

Alternativement, toutefois, ladite première partie amovible peut s'étendre de la première rangée au premier bord extérieur et la deuxième partie amovible de la paroi coupe-feu s'étendre entre les première et deuxième rangées. Dans ce deuxième cas, afin d'assurer une bonne étanchéité de la paroi coupe-feu la deuxième partie amovible peut chevaucher une surface adjacente de la partie fixe et la première partie amovible chevaucher une surface adjacente de la deuxième partie amovible. Par ailleurs, les première et deuxième parties amovibles peuvent comprendre des mors reliés par un ou plusieurs boulons, de manière à fixer la première partie amovible à la deuxième partie amovible de manière libérable.

Afin aussi d'assurer une bonne étanchéité de la paroi coupe-feu, la première partie amovible peut chevaucher une surface adjacente de la partie fixe.

Afin d'accroître la raideur de la paroi coupe-feu, mais aussi pour assurer une bonne étanchéité entre la paroi coupe-feu et chaque orifice traversant, la première partie amovible peut comprendre un raidisseur intérieur, en saillie dans le sens de l'épaisseur, situé sur un pourtour de l'au moins un orifice adjacent parmi les orifices traversants.

Afin aussi d'accroître la raideur de la paroi coupe-feu tout en assurant son étanchéité, la première partie amovible peut présenter, sur le premier bord extérieur, un raidisseur extérieur, en saillie dans le sens de l'épaisseur, qui chevauche un soyage d'un raidisseur adjacent de la partie fixe de la paroi coupe-feu.

Pour fixer de manière libérable la première partie amovible à la partie fixe, la première partie amovible et la partie fixe peuvent comprendre des mors reliés par un ou plusieurs boulons.

Cette divulgation concerne aussi un bras de servitude de turbomachine, pouvant comprendre une structure tubulaire, un ou plusieurs conduits et/ou câbles électriques à l'intérieur de la structure tubulaire et la paroi coupe-feu susmentionnée, et dans lequel les conduits et/ou câbles électriques peuvent traverser la paroi coupe-feu par les orifices traversants, ainsi qu'une turbomachine pouvant comprendre au moins un tel bras de servitude, qui peut s'étendre radialement entre deux viroles axiales, notamment pour traverser une veine d'air d'une soufflante de la turbomachine.

Finalement, cette invention concerne aussi un procédé d'ouverture, selon la revendication 15, de la paroi coupe- feu susmentionnée, comprenant une étape de démontage de la première partie amovible pour permettre l'accès à un ou plusieurs conduits et/ou câbles électriques reçus dans les orifices traversants.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :

### Brève description des dessins

[Fig. 1] La figure 1 est une vue schématique d'un aéronef équipé de turboréacteurs à double flux.
[Fig. 2] La figure 2 est une vue schématique d'un des turboréacteurs à double flux de l'aéronef de la figure 1, avec des bras de servitude traversant radialement la veine d'air de la soufflante.
[Fig. 3] La figure 3 est une vue en éclaté d'un premier mode de réalisation d'une paroi coupe-feu destinée à l'un des bras de servitude de la figure 2.
[Fig. 4A] La figure 4A est une première vue en perspective de la paroi coupe-feu de la figure 3.
[Fig. 4B] La figure 4B est une deuxième vue en perspective de la paroi coupe-feu de la figure 3.
[Fig. 5] La figure 5 est une vue schématique d'un deuxième mode de réalisation d'une paroi coupe-feu destinée à l'un des bras de servitude de la figure 2

### Description des modes de réalisation

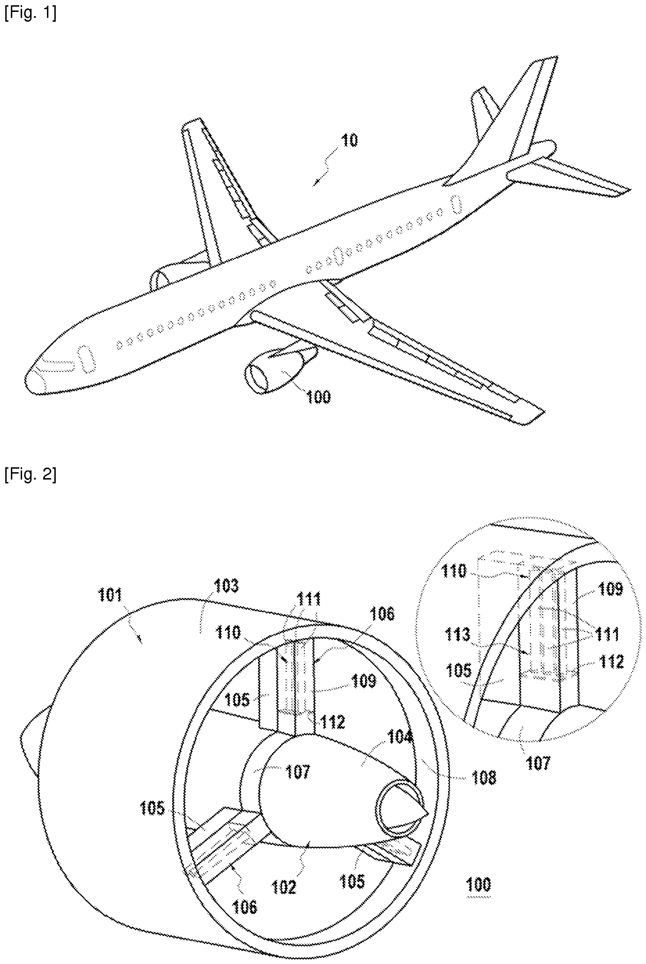

Comme illustré sur la figure 1, un aéronef 10 peut être équipé de turbomachines, notamment sous forme de turboréacteurs à double flux 100. Comme illustré sur la figure 2, ces turboréacteurs à double flux 100 peuvent comprendre une soufflante 101 et un noyau moteur 102, avec des carters 103, 104 respectifs coaxiaux. Pour maintenir la concentricité des carters 103, 104, ceux-ci peuvent être reliés par des bras structuraux 105 s'étendant radialement à travers la veine d'air de la soufflante 101.

Afin de permettre aussi l'acheminement de fluides et/ou d'électricité entre le carter 103 de la soufflante et le carter 104 du noyau moteur 102, le turboréacteur à double flux 100 peut comporter aussi des bras de servitude 106 s'étendant radialement, à travers la veine d'air de la soufflante 101, d'une virole intérieure 107 intégrée au carter 104 du noyau moteur 102, jusqu'à une virole extérieure 108 intégrée au carter 103 de la soufflante 101. Ces bras de servitude 106 peuvent être adjacents des bras structuraux 105, directement en aval de ceux-ci suivant le sens d'écoulement de l'air dans la veine d'air de la soufflante 101.

Chacun des bras de servitude 106 peut comprendre une structure tubulaire 109 et un faisceau 110 de conduits et/ou câbles électriques 111 s'étendant à l'intérieur de cette structure tubulaire 108. Quoique les bras de servitude 106 illustrés aient de structures tubulaires 108 à section essentiellement rectangulaire, d'autres formes de section transversale sont également envisageables. Afin de permettre l'accès à l'intérieur de la structure tubulaire 108, celle-ci peut comprendre des parois extérieures 113 démontables. Afin d'éviter la propagation du feu à l'intérieur, chaque bras de servitude 106 peut également comprendre au moins une paroi coupe-feu 112, qui peut être arrangée transversalement à l'intérieur de la structure tubulaire 108.

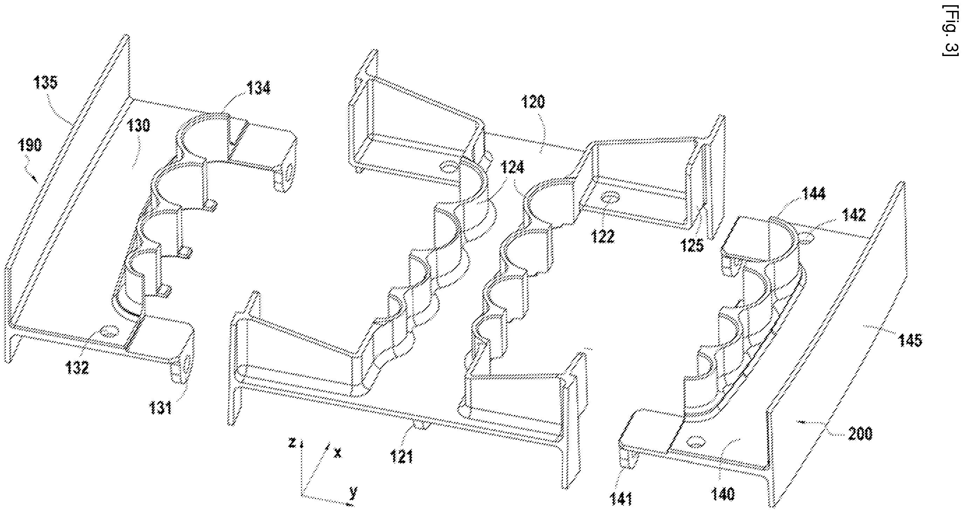

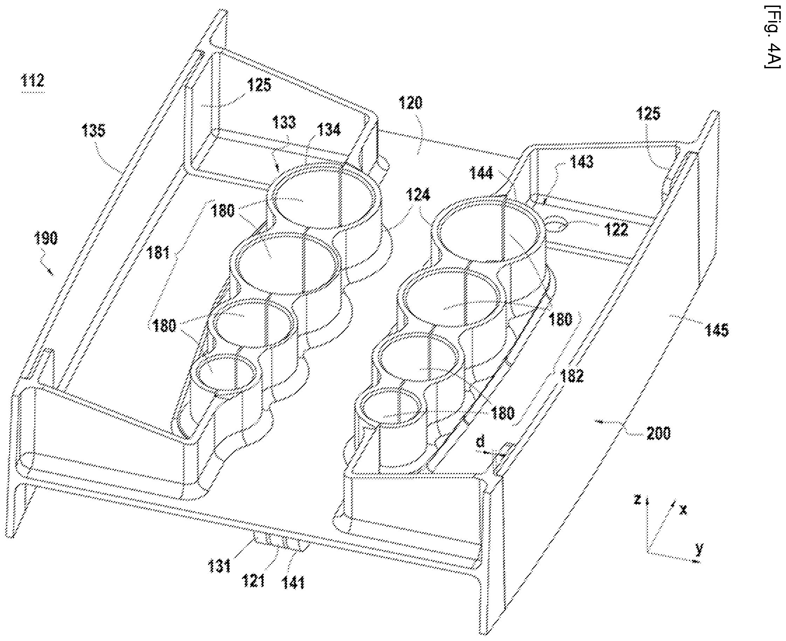

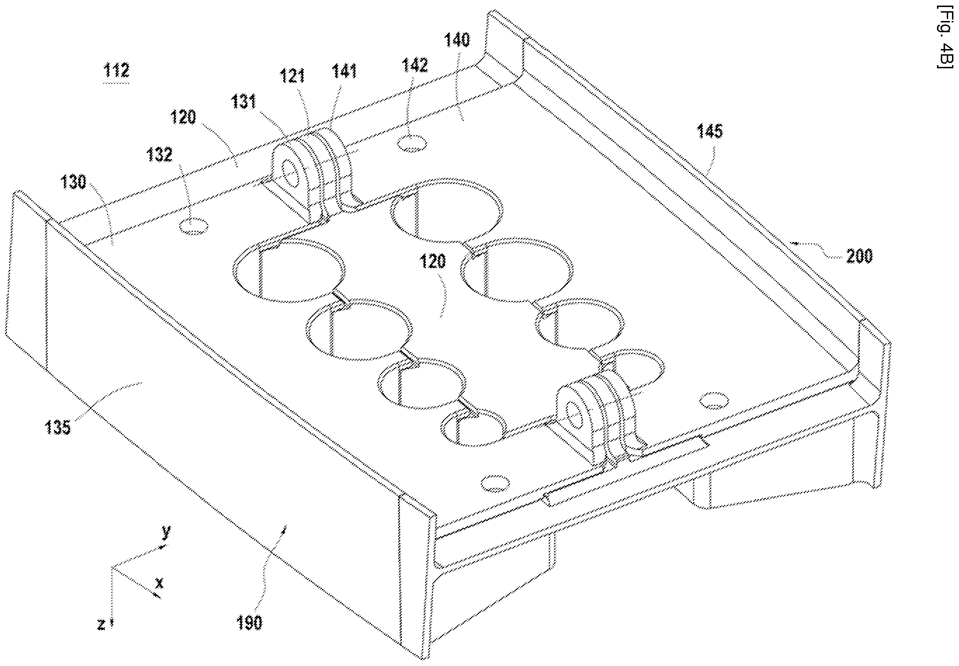

Comme illustré sur les figures 3, 4A et 4B, dans au moins un premier mode de réalisation, la paroi coupe-feu 112 peut comprendre une partie fixe 120 et deux parties amovibles 130, 140. La partie fixe 120 peut être solidaire de la structure tubulaire 108 du bras de servitude 106, tandis que chacune des parties amovibles 130, 140 peut être reliée, de manière libérable, à la partie fixe 120, par des boulons (non illustrés). Au moins un de ces boulons peut être orienté dans le sens Y de la largeur de la paroi coupe-feu 112 pour relier des mors 121,131, 141, saillants dans le sens Z de l'épaisseur de la paroi coupe-feu 112, sur, respectivement, la partie fixe 120, la première partie amovible 130 et la deuxième partie amovible 140 de la paroi coupe-feu 112. D'autres boulons peuvent être orientés dans le sens Z de l'épaisseur de la paroi coupe-feu 112 pour relier, respectivement, la première partie amovible 130 et la deuxième partie amovible 140 à la partie fixe 120. Pour permettre le passage de ces autres boulons, la partie fixe 120 peut présenter des orifices 122 alignés avec des orifices correspondants 132, 142 dans des zones de chevauchement 133,143 respectives. Ces zones de chevauchement 133, 143, dans lesquelles la partie fixe 120 peut se chevaucher, dans le sens Z de l'épaisseur, avec les première et deuxième parties amovibles 130, 140, respectivement, permettent aussi d'assurer une bonne étanchéité de la paroi coupe-feu 112.

Comme illustré aussi sur les figures 4A et 4B, la paroi coupe-feu 112 peut présenter un ou plusieurs orifices traversants 180 pour permettre le passage des conduits et/ou câbles électriques 111 du faisceau 110. Si la paroi coupe-feu 112 comprend une pluralité de tels orifices traversants 180, ceux-ci peuvent être arrangés en une ou plusieurs rangées 181,182. Chacune de ces rangées 181, 182 peut s'étendre dans le sens X de la longueur de la paroi coupe-feu 112. Afin d'assurer une bonne étanchéité de la paroi coupe-feu 112 autour de chaque conduit ou câble électrique 110, ces orifices traversants 180 peuvent être dimensionnés de manière à ce que chaque conduit ou câble électrique 111 y soit étroitement serré, et leur pourtour présenter une surépaisseur sensible, qui peut former des raidisseurs 124,134,144, en saillie dans le sens Z de l'épaisseur, sur, respectivement, la partie fixe 120, la première et la deuxième partie amovible 130, 140.

Comme illustré aussi sur les figures 4A et 4B, la première partie amovible 130 peut s'étendre de la première rangée 181 d'orifices traversants 180 à un premier bord extérieur 190 de la paroi coupe-feu 112, tandis que la deuxième partie amovible 140 peut s'étendre de la deuxième rangée 182 d'orifices traversants 180 à un deuxième bord extérieur 200 de la paroi coupe-feu 112, d'un côté opposé au premier bord extérieur 190. Ainsi, dans un procédé d'ouverture de la paroi coupe-feu 112, la première partie amovible 130 peut être démontée pour permettre l'accès aux conduits et/ou câbles électriques 111 reçus dans la première rangée 181 d'orifices traversants 180, afin de permettre leur inspection, entretien, réparation et/ou remplacement individuels, tandis que la deuxième partie amovible 140 peut être démontée pour permettre l'accès aux conduits et/ou câbles électriques 111 reçus dans la deuxième rangée 182 d'orifices traversants 180, afin de permettre leur inspection, entretien, réparation et/ou remplacement individuels.

Le raidisseur 124 de la partie fixe 120 peut se prolonger jusque sur les bords extérieurs 190, 200 de la paroi coupe-feu 112, et présenter à cet endroit des soyages 125 permettant la superposition de raidisseurs extérieurs 135, 145, saillants aussi dans le sens Z de l'épaisseur, sur les extrémités adjacentes du raidisseur 124. Ce chevauchement, qui peut présenter un jeu d de, par exemple, 1 mm dans le sens Y de la largeur, permet aussi d'assurer une bonne étanchéité de la paroi coupe-feu 112 avec les bords extérieurs 190, 200 en contact avec les parois de la structure tubulaire 108.

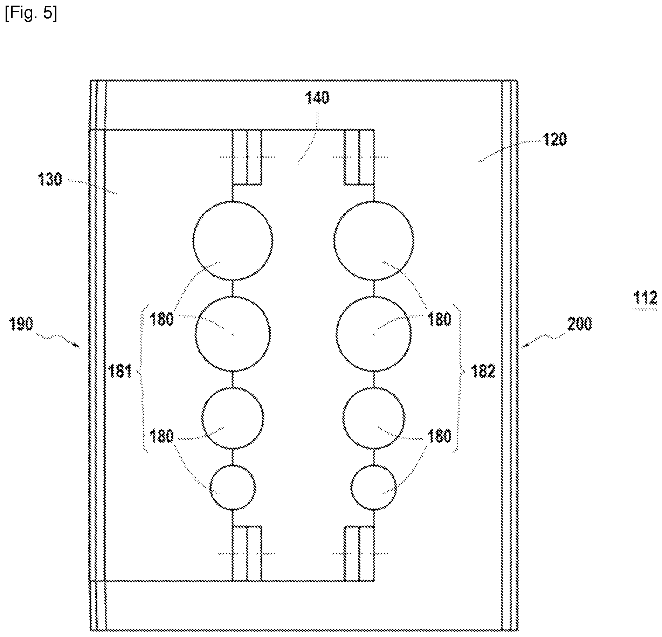

Comme dans le mode de réalisation alternatif illustré de manière schématique sur la figure 5, il est aussi envisageable que la deuxième partie amovible 140 s'étende plutôt entre les deux rangées 181, 182 d'orifices traversants 180, et que la partie fixe 120 comprenne un segment interposé entre la deuxième rangée 182 et le deuxième bord extérieur 200 de la paroi coupe-feu 112. Afin de les relier de manière libérable, les première et deuxième parties amovibles 130 peuvent comprennent des mors reliés par un ou plusieurs boulons. Pour assurer une bonne étanchéité entre les parties amovibles 130, 140 et entre la deuxième partie amovible 140 et la partie fixe, la deuxième partie amovible 140 peut chevaucher une surface adjacente de la partie fixe 120 et la première partie amovible 130 chevaucher une surface adjacente de la deuxième partie amovible 140.

Dans ce deuxième mode de réalisation, la première partie amovible 130 peut être individuellement démontée pour permettre l'accès aux conduits et/ou câbles électriques 111 reçus dans la première rangée 181 d'orifices traversants 180, afin de permettre leur inspection, entretien, réparation et/ou remplacement individuels, tandis que les deux parties amovibles 130, 140 peuvent être démontées pour permettre l'accès aux conduits et/ou câbles électriques 111 reçus dans la deuxième rangée 182 d'orifices traversants 180, afin de permettre leur inspection, entretien, réparation et/ou remplacement individuels.

Quoique la présente invention ait été décrite en se référant à des exemples spécifiques, il est évident que des différentes modifications et changements peuvent être effectués sur ces exemples sans sortir de la portée générale de l'invention telle que définie par les revendications. Par conséquent, la description et les dessins doivent être considérés dans un sens illustratif plutôt que restrictif.

## Revendications

1. Paroi coupe-feu (112) pour bras de servitude (106) de turbomachine (100), ladite paroi coupe-feu (112) comprenant un ou plusieurs orifices traversants (180) dans un sens (Z) de l'épaisseur de la paroi coupe-feu (112) et une partie fixe (120); **caractérisée** en comprenant une première partie amovible (130) s'étendant, dans un sens (Y) de la largeur, orthogonal audit sens (Z) de l'épaisseur, d'au moins un orifice adjacent parmi les orifices traversants (180), à un premier bord extérieur (190) de la paroi coupe-feu (112).

2. Paroi coupe-feu (112) suivant la revendication 1, comprenant une ou deux rangées (181,182) desdits orifices traversants (180), s'étendant chacune dans un sens (X) de la longueur, orthogonal auxdits sens (Z,Y) de l'épaisseur et de la largeur.

3. Paroi coupe-feu (112) suivant la revendication 2, dans laquelle lesdites rangées (181,182) comprennent une première rangée (181) et une deuxième rangée (182) entre lesquelles la partie fixe (120) de la paroi coupe-feu s'étend dans le sens (X) de la longueur, la première partie amovible (130) s'étend de la première rangée (181) au premier bord extérieur (190) et une deuxième partie amovible (140) de la paroi coupe-feu (112) s'étend de la deuxième rangée (182) à un deuxième bord extérieur (200) de la paroi coupe-feu (112), opposé au premier bord extérieur (190).

4. Paroi coupe-feu (112) suivant la revendication 2, dans laquelle lesdites rangées (181,182) comprennent une première rangée (181) et une deuxième rangée (182), ladite première partie amovible (130) s'étend de la première rangée (181) au premier bord extérieur (190) et une deuxième partie amovible (140) de la paroi coupe-feu (112) s'étend entre les première et deuxième rangées (181,182).

5. Paroi coupe-feu (112) suivant la revendication 4, dans laquelle la deuxième partie amovible (140) chevauche une surface adjacente de la partie fixe (120) et la première partie amovible (130) chevauche une surface adjacente de la deuxième partie amovible (140).

6. Paroi coupe-feu (112) suivant les revendications 4 ou 5, dans laquelle les première et deuxième parties amovibles (130, 140) comprennent des mors reliés par un ou plusieurs boulons.

7. Paroi coupe-feu (112) suivant l'une quelconque des revendications 1 à 3, dans laquelle la première partie amovible (130) chevauche une surface adjacente de la partie fixe (120).

8. Paroi coupe-feu (112) suivant l'une quelconque des revendications précédentes, dans laquelle la première partie amovible (130) comprend un raidisseur intérieur (134), en saillie dans le sens (Z) de l'épaisseur, situé sur un pourtour de l'au moins un orifice adjacent parmi les orifices traversants (180).

9. Paroi coupe-feu (112) suivant l'une quelconque des revendications précédentes, dans laquelle la première partie amovible (130) présente, sur le premier bord extérieur (190), un raidisseur extérieur (135), en saillie dans le sens (Z) de l'épaisseur, qui chevauche un soyage (125) d'un raidisseur adjacent (124) de la partie fixe (120) de la paroi coupe-feu (112).

10. Paroi coupe-feu (112) suivant l'une quelconque des revendications précédentes, dans laquelle la première partie amovible (130) et la partie fixe (120) comprennent des mors (121,131) reliés par un ou plusieurs boulons.

11. Bras de servitude (106) de turbomachine (100), comprenant une structure tubulaire (109), un ou plusieurs conduits et/ou câbles électriques (111) à l'intérieur de la structure tubulaire (109) et une paroi coupe-feu (112) suivant l'une quelconque des revendications précédentes, dans lequel les conduits et/ou câbles électriques (111) traversent la paroi coupe-feu (112) par les orifices traversants (180).

12. Turbomachine (100) comprenant au moins un bras de servitude (106) suivant la revendication 11.

13. Turbomachine (100) suivant la revendication 12, dans laquelle l'au moins un bras de servitude (106) s'étend radialement entre deux viroles coaxiales (107,108)

14. Turbomachine (100) suivant la revendication 13, dans laquelle l'au moins un bras de servitude (106) traverse une veine d'air d'une soufflante (103) de la turbomachine.

15. Procédé d'ouverture d'une paroi coupe-feu (112) suivant l'une quelconque des revendications 1 à 10, comprenant une étape de démontage de la première partie amovible (130) pour permettre l'accès à un ou plusieurs conduits et/ou câbles électriques (111) reçus dans les orifices traversants (180).

## Patentansprüche

1. Brandwand (112) für einen Versorgungsarm (106) einer Strömungsmaschine (100), wobei die Brandwand (112) eine oder mehrere Durchgangsöffnungen (180) in einer Dickenrichtung (Z) der Brandwand (112) und einen feststehenden Teil (120) umfasst, **dadurch gekennzeichnet, dass** sie einen ersten abnehmbaren Teil (130) umfasst, der sich in einer Breitenrichtung (Y), die senkrecht zu der Dickenrichtung (Z) ist, von mindestens einer angrenzenden Öffnung unter den Durchgangsöffnungen (180) zu einer ersten Außenkante (190) der Brandwand (112) erstreckt.

2. Brandwand (112) nach Anspruch 1, umfassend eine oder zwei Reihen (181, 182) der Durchgangsöffnungen (180), die sich jeweils in einer Längenrichtung (X) erstrecken, die senkrecht zu der Dicken- und der Breitenrichtung (Z, Y) ist.

3. Brandwand (112) nach Anspruch 2, wobei die Reihen (181, 182) eine erste Reihe (181) und eine zweite Reihe (182) umfassen, zwischen denen sich der feststehende Teil (120) der Brandwand in der Längenrichtung (X) erstreckt, sich der erste abnehmbare Teil (130) von der ersten Reihe (181) zu der ersten Außenkante (190) erstreckt und sich ein zweiter beweglicher Teil (140) der Brandwand (112) von der zweiten Reihe (182) zu einer zweiten Außenkante (200) der Brandwand (112), die der ersten Außenkante (190) gegenüberliegt, erstreckt.

4. Brandwand (112) nach Anspruch 2, wobei die Reihen (181, 182) eine erste Reihe (181) und eine zweite Reihe (182) umfassen, sich der erste abnehmbare Teil (130) von der ersten Reihe (181) zu der ersten Außenkante (190) erstreckt und sich ein zweiter abnehmbarer Teil (140) der Brandwand (112) zwischen der ersten und der zweiten Reihe (181, 182) erstreckt.

5. Brandwand (112) nach Anspruch 4, wobei sich der zweite bewegliche Teil (140) mit einer an den feststehenden Teil (120) angrenzenden Fläche überlappt und sich der erste abnehmbare Teil (130) mit einer an den zweiten abnehmbaren Teil (140) angrenzenden Fläche überlappt.

6. Brandwand (112) nach den Ansprüchen 4 oder 5, wobei der erste und der zweite abnehmbare Teil (130, 140) durch eine oder mehrere Schrauben verbundene Backen umfassen.

7. Brandwand (112) nach einem der Ansprüche 1 bis 3, wobei sich der erste abnehmbare Teil (130) mit einer an den feststehenden Teil (120) angrenzenden Fläche überlappt.

8. Brandwand (112) nach einem der vorhergehenden Ansprüche, wobei der erste abnehmbare Teil (130) eine Innenversteifung (134) umfasst, die in der Dickenrichtung (Z) vorsteht und sich auf einem Umfang der mindestens einen angrenzenden Öffnung unter den Durchgangsöffnungen (180) befindet.

9. Brandwand (112) nach einem der vorhergehenden Ansprüche, wobei der erste abnehmbare Teil (130) auf der ersten Außenkante (190) eine Außenversteifung (135) aufweist, die in der Dickenrichtung (Z) vorsteht und sich mit einem Gewindedurchzug (125) einer angrenzenden Versteifung (124) des feststehenden Teils (120) der Brandwand (112) überlappt.

10. Brandwand (112) nach einem der vorhergehenden Ansprüche, wobei der erste abnehmbare Teil (130) und der feststehende Teil (120) durch eine oder mehrere Schrauben verbundene Backen (121, 131) umfassen.

11. Versorgungsarm (106) einer Strömungsmaschine (100), umfassend eine röhrenförmige Struktur (109), ein(e) oder mehrere elektrische Leitungen und/oder Kabel (111) im Inneren der röhrenförmigen Struktur (109) und eine Brandwand (112) nach einem der vorhergehenden Ansprüche, wobei die elektrischen Leitungen und/oder Kabel (111) die Brandwand (112) durch die Durchgangsöffnungen (180) durchqueren.

12. Strömungsmaschine (100), umfassend mindestens einen Versorgungsarm (106) nach Anspruch 11.

13. Strömungsmaschine (100) nach Anspruch 12, wobei sich der mindestens eine Versorgungsarm (106) radial zwischen zwei koaxialen Rohrabschnitten (107, 108) erstreckt.

14. Strömungsmaschine (100) nach Anspruch 13, wobei der mindestens eine Versorgungsarm (106) einen Luftstrom eines Gebläses (103) der Strömungsmaschine durchquert.

15. Verfahren zum Öffnen einer Brandwand (112) nach einem der Ansprüche 1 bis 10, umfassend einen Schritt des Entfernens des ersten abnehmbaren Teils (130), um den Zugang zu einer/einem oder mehreren in den Durchgangsöffnungen (180) aufgenommenen elektrischen Leitungen und/oder Kabeln (111) zu ermöglichen.

## Claims

1. A fire wall (112) for a turbomachine (100) auxiliary arm (106), said fire wall (112) comprising one or more through openings (180) in a thickness direction (Z) of the fire wall (112), and a fixed portion (120), **characterised in** comprising a first removable portion (130) extending, in a width direction (Y), orthogonal to said thickness direction (Z), from at least one adjacent opening among the through openings (180), to a first outer edge (190) of the fire wall (112).

2. The fire wall (112) according to claim 1, comprising one or two rows (181,182) of said through openings (180), each extending in a length direction (X), orthogonal to said thickness and width directions (Z, Y).

3. The fire wall (112) according to claim 2, wherein said rows (181,182) comprise a first row (181) and a second row (182) between which the fixed portion (120) of the fire wall extends in the length direction (X), the first removable portion (130) extends from the first row (181) to the first outer edge (190) and a second removable portion (140) of the fire wall (112) extends from the second row (182) to a second outer edge (200) of the fire wall (112), opposite to the first outer edge (190).

4. The fire wall (112) according to claim 2, wherein said rows (181,182) comprise a first row (181) and a second row (182), said first removable portion (130) extends from the first row (181) to the first outer edge (190) and a second removable portion (140) of the fire wall (112) extends between the first and second rows (181,182).

5. The fire wall (112) according to claim 4, wherein the second removable portion (140) overlaps an adjacent surface of the fixed portion (120) and the first removable portion (130) overlaps an adjacent surface of the second removable portion (140).

6. The fire wall (112) according to claims 4 or 5, wherein the first and second removable portions (130, 140) comprise jaws connected by one or more bolts.

7. The fire wall (112) according to any one of claims 1 to 3, wherein the first removable portion (130) overlaps an adjacent surface of the fixed portion (120).

8. The fire wall (112) according to any one of the preceding claims, wherein the first removable portion (130) comprises an inner stiffener (134), protruding in the thickness direction (Z), located on a perimeter of the at least one adjacent opening among the through openings (180).

9. The fire wall (112) according to any one of the preceding claims, wherein the first removable portion (130) has, on the first outer edge (190), an outer stiffener (135), protruding in the thickness direction (Z), which overlaps a fitting (125) of an adjacent stiffener (124) of the fixed portion (120) of the fire wall (112).

10. The fire wall (112) according to any one of the preceding claims, wherein the first removable portion (130) and the fixed portion (120) comprise jaws (121,131) connected by one or more bolts.

11. A turbomachine (100) auxiliary arm (106), comprising a tubular structure (109), one or more ducts and/or electrical cables (111) inside the tubular structure (109) and a fire wall (112) according to any one of the preceding claims, wherein the ducts and/or electrical cables (111) pass through the fire wall (112) by the through openings (180).

12. A turbomachine (100) comprising at least one auxiliary arm (106) according to claim 11.

13. The turbomachine (100) according to claim 12, wherein the at least one auxiliary arm (106) extends radially between two coaxial shrouds (107,108).

14. The turbomachine (100) according to claim 13, wherein the at least one auxiliary arm (106) passes through an air stream of a fan (103) of the turbomachine.

15. A method of opening a fire wall (112) according to any one of claims 1 to 10, comprising a step of dismantling the first removable portion (130) to allow access to one or more ducts and/or electrical cables (111) received in the through openings (180). |
